# EUROPEAN PATENT SPECIFICATION

(11) **EP 4 496 075 B1**
(45) Date of publication and mention of the grant of the patent: **18.02.2026**
(21) Application number: 24186882.7
(22) Date of filing: 05.07.2024
(51) Int. Cl.: H01M 10/613

(54) **RECHARGEABLE BATTERY PACK**
WIEDERAUFLADBARES BATTERIEPACK
BLOC-BATTERIE RECHARGEABLE

(30) Priority: 20.07.2023 KR 20230094887
(43) Date of publication of application: 22.01.2025
(73) Proprietor: SAMSUNG SDI CO., LTD., Giheung-gu Yongin-si, Gyeonggi-do 17084 (KR)
(72) Inventor: JEON, Jeehoon, 17084 Yongin-si (KR); WOO, Beomjun, 17084 Yongin-si (KR); MOON, Soodeok, 17084 Yongin-si (KR); RYU, Jaelim, 17084 Yongin-si (KR); JI, Taeho, 17084 Yongin-si (KR)
(74) Representative: Marks & Clerk LLP

(56) References cited:
- CN-A- 115 066 788
- US-A1- 2018 212 216
- US-A1- 2020 398 652

## Description

### BACKGROUND

### 1. Field

Aspects of embodiments of the present disclosure relate to a rechargeable battery pack.

### 2. Description of the Related Art

Different from a primary battery, a rechargeable battery is a battery that is designed to be repeatedly charged and discharged. Small-capacity rechargeable batteries are used in small, portable electronic devices, such as mobile phones, laptop computers, and camcorders. Rechargeable batteries with large capacity and high density are used as power sources for driving motors in hybrid vehicles and electric vehicles or for energy storage.

A rechargeable battery may be used as (or implemented as) a rechargeable battery module including a plurality of battery cells connected together in series and/or coupled in parallel to drive, for example, the motor of a hybrid vehicle, which requires relatively high energy density. To implement a relatively high power rechargeable battery module (e.g., for an electric vehicle), a plurality of rechargeable battery cells provided in a number and connected in a configuration to provide a desired amount of electric power are stacked in a frame to form a rechargeable battery module.

These rechargeable battery modules are connected together in series and/or in parallel within a housing manufactured by using various methods to form a rechargeable battery pack. Therefore, various types of rechargeable battery modules to provide various capacity rechargeable battery packs are being produced. US 2018/212216 A1 relates to a battery holder for a vehicle.

### SUMMARY

The presently claimed invention provides a rechargeable battery pack according to claim 1. Further developments of the herein claimed invention are described in the dependent claims. In terms of energy capacity, packs including rechargeable battery modules have limitations. A rechargeable battery pack that assembles battery cells directly without a rechargeable battery module may increase or maximize the energy density of the rechargeable battery pack. In addition, there is a desire to simplify a structure of a frame and a cooling portion, strengthen the rigidity of the frame and the cooling portion, and lighten the frame and the cooling portion.

Embodiments of the present disclosure provide a rechargeable battery pack that simplifies a structure of a frame and a cooling portion, reinforces rigidity of the frame and the cooling portion, and lightens the frame and the cooling portion. In addition, embodiments provide a rechargeable battery pack that increases or maximizes pack energy density by stacking battery cells.

A rechargeable battery pack, according to an embodiment of the present disclosure, includes: a cell stack including a plurality of battery cells stacked in a first direction; a center frame integrally forming a first floor and a first sidewall supporting the cell stack; and a first side frame and a second side frame integrally forming a second floor coupled to the first floor in a second direction that crosses the first direction and a second side wall supporting narrow cell side surfaces of the cell stack. The first floor and the second floor include a plurality of cooling water paths extending in the first direction and spaced a distance from each other in the second direction.

The first floor and the second floor may include an inflow balancer that connects inlets of the cooling water path to balance the inflow cooling water flow, an outflow balancer that connects outlets of the cooling water path to balance the outflow cooling water flow, and a regression portion that connects the cooling water path on a regression side of the cooling water path to form a balance of cooling water regression.

The inflow balancer may connect inflow balancing channels, each of which are connected to the inlets of the cooling water path, together at a final inlet, and the outflow balancer may connect outflow balancing channels, each of which are connected to the outlets of the cooling water path, together at a final outlet.

The regression portion may include: a first regression line that connects the outlet and the inlets of the cooling water path in the first floor; and a second regression line that connects the outlet and the inlets of the cooling water path in the second floor.

The first regression line may have a plurality of regression holes and may be a first regression pipe that is welded to the first floor and connected to the cooling water path by a rubber seal.

The second regression line may be provided at one side of the first regression pipe in the first direction, may have a plurality of regression holes, and may be a second regression pipe welded to the second floor and connected to the cooling water path by a rubber seal.

The inflow balancing channels of the inflow balancer may be connected to the cooling water paths in the second floor of the first side frame and to half of the cooling water paths in the first floor of the center frame, and the outflow balancing channels of the outflow balancer may be connected to the cooling water paths in the second floor of the second side frame and the remaining half of the cooling water paths in the first floor of the center frame.

The inflow balancing channels of the inflow balancer may form a symmetrical structure in the second direction.

The outflow balancing channels of the outflow balancer may form a symmetrical structure in the second direction.

The inflow balancing channels of the inflow balancer may have lengths that respectively gradually decrease or increase from the outside toward the center in the second direction.

The outflow balancing channels of the outflow balancer may have lengths that respectively decrease or increase (e.g. gradually decrease or increase respectively) from the outside toward the center in the second direction.

The first floor and the second floor may be welded at a welding bottom surface having a first width, a welding top surface having a second width that is larger than the first width, and a welding slope connecting the bottom surface and the top surface.

The first floor and the second floor may be connected through coupling of a coupling protrusion and a coupling groove formed along the first direction.

The coupling protrusion and the coupling groove may be fixed by welding in the coupled state.

The first floor may have a narrow lower surface and a wide upper surface such that side surfaces thereof are inclined downwardly, the second floor may have a wide lower surface and a narrow upper surface such that side surfaces thereof are inclined upwardly, and the downward-inclined side surfaces of the first floor may be coupled to the upward-inclined side surfaces of the second floor at opposite sides in the second direction.

The rechargeable battery pack may further include a first end frame and a second end frame respectively coupled to opposite ends of the center frame, the first side frame, and the second side frame in the first direction to support wide cell side surfaces of the cell stack.

At least some of the above and other features of the invention are set out in the claims.

The rechargeable battery pack, according to embodiments, integrally forms a center frame and first and second side frames and includes a plurality of cooling water paths in the first floor and second floor, thereby simplifying the structure of the frame and cooling portion, strengthening the rigidity of the frame and cooling portion, lightening the frame and cooling portion.

In addition, according to embodiments, a cell stack that includes a plurality of battery cells stacked in the first direction is provided between the first and second end frames, and thus, pack energy density can be increased or maximized.

### BRIEF DESCRIPTION OF THE DRAWINGS

FIG. 1 is a perspective view of a rechargeable battery according to an embodiment.
FIG. 2 is an exploded perspective view of a pack frame of the rechargeable battery shown in FIG. 1.
FIG. 3 is a perspective view of a cell stack in which the battery cells shown in FIG. 1 are stacked.
FIG. 4 is a cross-sectional view taken along the line IV-IV of FIG. 2.
FIG. 5 is a cross-sectional view of the pack frame taken along the line V-V of FIG. 2 after being connected together.
FIG. 6 is a cross-sectional view of a pack frame coupling portion according to another embodiment.
FIG. 7 is a schematic diagram of a pack frame coupling portion according to another embodiment.
FIG. 8 is a top plan view of a cooling water path formed in the pack frame shown in FIG. 1 and FIG. 2.
FIG. 9 is a perspective view of a flow balancer applied to the inlet and outlet of the cooling water path in the pack frame shown in FIG. 5.
FIG. 10 is a top plan view of a flow balancer according to another embodiment.
FIG. 11 is a top plan view of a flow balancer according to another embodiment.
FIG. 12 is a top plan view of the flow balancer shown in FIG. 9 installed at inlet/outlet side of a path in the pack frame.
FIG. 13 is an exploded perspective view of a regression portion of the cooling water path shown in FIG. 8.
FIG. 14 is an enlarged exploded perspective view of a portion of FIG. 13.
FIG. 15 is an enlarged top plan view of a portion of FIG. 13.
FIG. 16 is an image of a computer aided engineering (CAE) analysis result when using a flow balancer.
FIG. 17 is a graph describing an inlet area flow distribution for each cooling channel when using a flow balancer.
FIG. 18 is a graph describing an outlet area flow distribution for each cooling channel when using a flow balancer.
FIG. 19 is a graph describing an improvement of a crush characteristic in the x-axis direction as a result of CAE analysis when applying a structure in which the frame and the cooling water path are integrated according to an embodiment.
FIG. 20 is a graph describing the crush characteristic in the x-axis direction as a result of the CAE analysis when applying a structure in which a frame and a cooling water path are not integrated according to a comparative example.

### DETAILED DESCRIPTION

Hereinafter, the present disclosure will be described more fully hereinafter with reference to the accompanying drawings, in which embodiments of the present disclosure are shown. As those skilled in the art would realize, the described embodiments may be modified in various different ways, all without departing from the scope of the present disclosure. The drawings and description are to be regarded as illustrative in nature and not restrictive.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

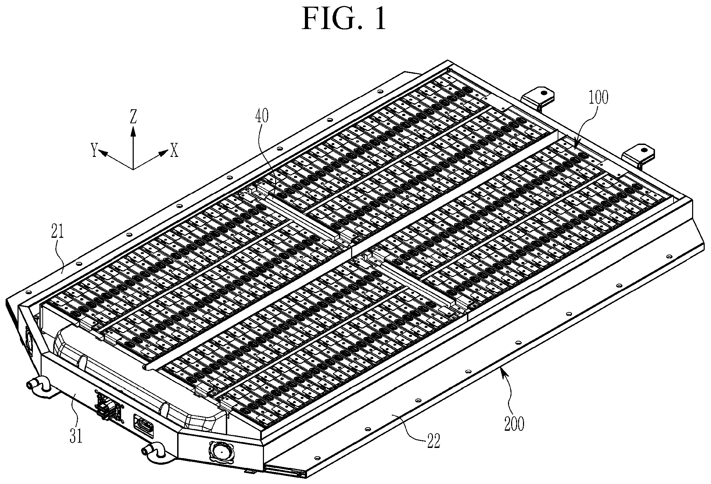

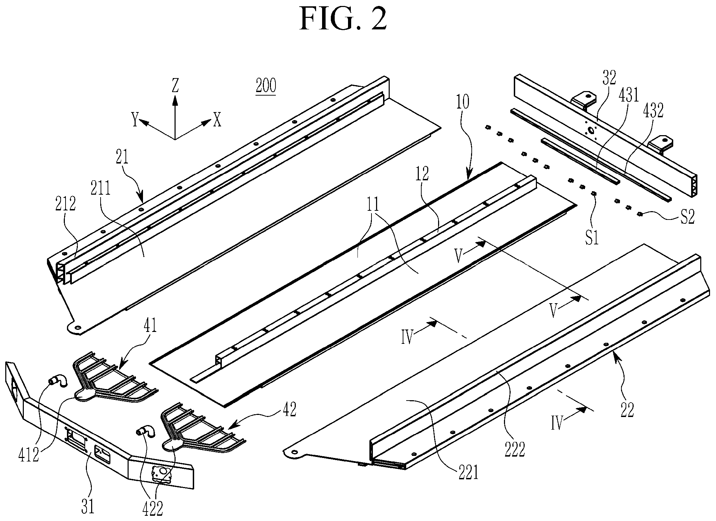

FIG. 1 is a perspective view of a rechargeable battery according to an embodiment, and FIG. 2 is an exploded perspective view of a pack frame of the rechargeable battery shown in FIG. 1. Referring to FIG. 1 and FIG. 2, a rechargeable battery pack, according to an embodiment, includes a plurality of cell stacks 100 and a pack frame 200 in which the cell stacks 100 are mounted.

The pack frame 200 includes a center frame 10, a first side frame 21, a second side frame 22, a first end frame 31, and a second end frame 32. The pack frame 200 may further include an intersection center frame 40 when a length of the pack frame 200 is long in a first direction (e.g., the x-axis direction).

The intersection center frame 40 is combined with the center frame 10 and the first and second side frames 21 and 22 in a middle of the first direction (e.g., the x-axis direction) to support wide cell side surfaces of different cell stacks 100 on both sides of the first direction.

The center frame 10 and the first and second side frames 21 and 22 may be extruded and cut, and thus, they may accommodate various sizes of the cell stack 100 depending on the length in the first direction (e.g., the x-axis direction). For example, the center frame 10, the first side frame 21, and the second side frame 22 may be cut to an appropriate length according to the length of the cell stack 100 in the first direction and then combined to form the pack frame 200.

In the pack frame 200, the center frame 10, the first side frame 21, and the second side frame 22 may be formed with an extrusion profile structure, and thus, an assembly space for the cell stack 100 can be easily formed.

The cross-sectional structure of the extrusion profile and changes in length of the center frame 10 and the first and second side frames 21 and 22 may allow for easy adjustments (e.g., size or length adjustments) in response to the various energy sizes of electric vehicles that are designed for various cell stack sizes.

The center frame 10 is configured to integrally form a first floor 11 and a first sidewall 12 and to support the cell stack 100. The first sidewall 12 is formed long in (e.g., primarily extends in) the first direction (e.g., the x-axis direction) with a height from a center of the first floor 11 in a second direction (e.g., the y-axis direction) to a third direction (e.g., the z-axis direction). Therefore, at both ends of the second direction (e.g., the y-axis direction) of center frame 10, an open first floor 11 is formed without sidewalls.

The first side frame 21 and the second side frame 22 are combined to the center frame 10 in the second direction (e.g., the y-axis direction) crossing (e.g., intersecting) the first direction (e.g., the x-axis direction). The first side frame 21 and the second side frame 22 integrally form second floors 211 and 221 and second sidewalls 212 and 222 and support narrow cell side surfaces (e.g., in the x-z plane) of the cell stack 100. The second floors 211 and 221 are combined to both sides (e.g., to opposite sides) of the first floor 11 in the second direction.

The first end frame 31 and the second end frame 32 may be combined to opposite ends of the center frame 10 and the first and second side frames 21 and 22 in the first direction (e.g., the x-axis direction) to support the wide cell side surfaces (e.g., in the y-z plane) and provide (or form) a cooling water inlet and outlet side of the cell stack 100.

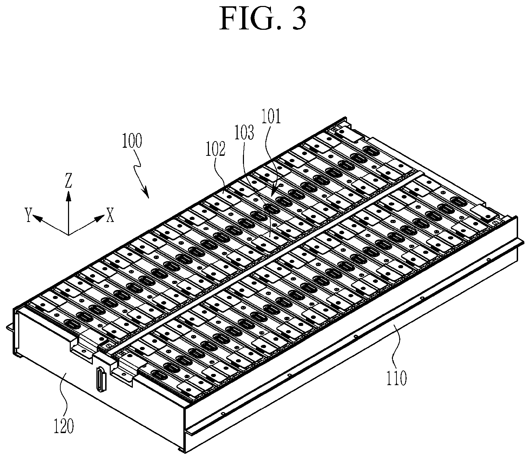

FIG. 3 is a perspective view of a cell stack in which the battery cells shown in FIG. 1 are stacked. Referring to FIG. 1 and FIG. 3, the cell stack 100 is formed by stacking a plurality of battery cells 101 in the first direction (e.g., the x-axis direction).

Before being mounted to the pack frame 200, the cell stack 100 maintains the battery cells 101 in the stacked state in a space formed by (or formed between) one pair of side cases 110 disposed separated from each other in the second direction (e.g. the y direction) and one pair of end cases 120 disposed separately from each other in the first direction (e.g. the x-axis direction). The battery cell 101 may be a rectangular rechargeable battery having wide cell side surfaces (e.g., in the y-z plane) and narrow cell side surfaces (e.g., in the x-z plane) and having electrode terminals 102 and 103 at a top side.

In battery cell 101, the wide cell side surfaces faces both sides of the battery cell 101 in the first direction (e.g., the x-axis direction), and the narrow cell side surfaces face both sides of the battery cell 101 in the second direction (e.g., the y-axis direction) that crosses the first direction (e.g., the x-axis direction). The electrode terminals 102 and 103 are directed (or face or extend) upwardly in a third direction (e.g., the z-axis direction) that is orthogonal to the first and second directions (e.g., the x and y-axis directions).

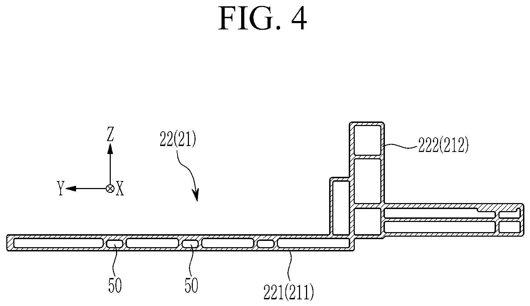

FIG. 4 is a cross-sectional view taken along the line IV-IV of FIG. 2. Referring to FIG. 2 and FIG. 4, the first side frame 21 and the second side frame 22 integrally form the second floors 211 and 221 and the second sidewalls 212 and 222, and the center frame 10 integrally forms the first floor 11 and the first sidewall 12.

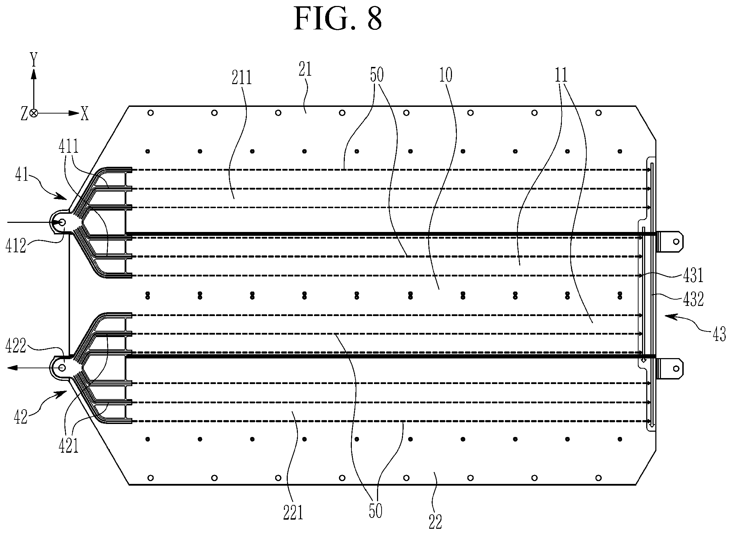

The second floor 221 has a plurality of cooling water paths 50 extending in the first direction (e.g., the x-axis direction) and disposed at a distance from (e.g., spaced apart from) each other in the second direction (e.g., the y-axis direction) and configured for cooling water to flow therethrough. The cooling water paths 50 have the same structure in the second floors 211 and 221 of the first and second side frames 21 and 22 and in the first floor 11 of the center frame 10, and thus, only the cooling water path 50 in the second side frame 22 is illustrated as an example. The entire configuration of the cooling water paths 50 is schematically illustrated in FIG. 8.

When the first floor 11 and the second floors 211 and 221 are provided with the cooling water path 50, a cooling portion including the cooling water path 50 is integrally formed with the first floor 11 and the second floors 211 and 221. Accordingly, the cooling portion is integrally formed with the pack frame 200. In such an embodiment, the structure of the cooling portion is simplified, the rigidity of the pack frame 200 and the cooling portion is strengthened, and the pack frame 200 and the cooling portion can be made lighter.

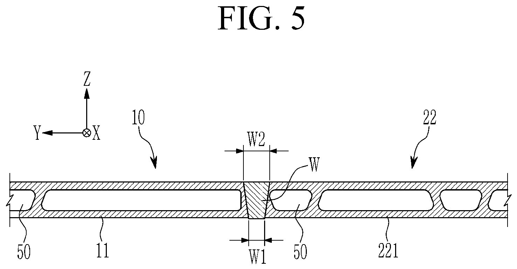

Hereinafter, the combination and connection structure of the first floor 11 and the second floors 211 and 221 will be described in more detail. FIG. 5 is a cross-sectional view of the pack frame taken along the line V-V of FIG. 2 after being connected (e.g., in an unexploded state). Referring to FIG. 5, in the center frame 10 and the second side frame 22, for example, the first floor 11 and the second floor 221 are welded with a welding bottom surface having a first width W1, a welding top surface having a second width W2, which is larger than the first width W1, and a welding slope connecting (or extending between) the bottom surface and the top surface. The welding portion W may form a downward wedge structure to strengthen the welding bond strength between the first floor 11 and the second floor 221.

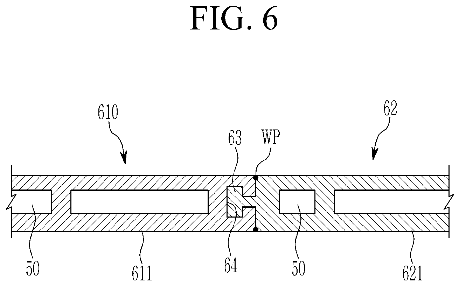

FIG. 6 is a cross-sectional view of a pack frame coupling portion according to another embodiment. Referring to FIG. 6, for example, in a center frame 610 and a second side frame 62, a first floor 611 and a second floor 621 are extruded, and thus, they are connected by coupling a coupling protrusion 63 and a coupling groove 64 formed along a first direction (e.g., the x-axis direction). In addition, the coupling protrusion 63 and the coupling groove 64 are further fixed by welding WP while being in a combined stated such that relative movement in the first and second directions can be prevented. The welding WP may be point welding at intervals (e.g., predetermined or repeating intervals) along the first direction.

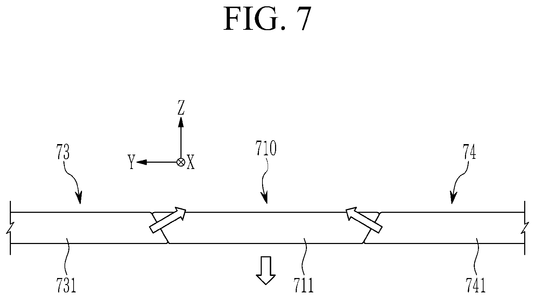

FIG. 7 is a schematic diagram of a pack frame coupling portion according to another embodiment. Referring to FIG. 7, a first floor 711 of a center frame 710 has a relatively narrow lower surface and a relatively wide upper surface, and thus, its side surfaces are inclined downwardly. Second floors 731 and 741 of first and second side frames 73 and 74 have relatively wide lower surfaces and relatively narrow upper surfaces, and thus, their side surfaces are inclined upwardly.

The downward-inclined side surfaces of the first floor 711 are coupled to the upward-inclined side surfaces of the second floors 731 and 741, which are disposed at opposite sides of the first floor 711 in the second direction (e.g., the y-axis direction). Because the upward-inclined side surfaces of the second floors 731 and 741 support the downward-inclined side surfaces of the first floor 711, the bonding strength of the first floor 711 and the second floors 731 and 741 may be stabilized, and when point welding is used, the bonding strength may be further strengthened.

Hereinafter, a cooling portion of the first floor 11 and the second floors 211 and 221 will be described in more detail. FIG. 8 is a top plan view of a cooling water path formed in the pack frame shown in FIG. 1 and FIG. 2. Referring to FIG. 8, the first floor 11 and the second floors 211 and 221 include an inflow balancer 41, an outflow balancer 42, and a regression portion 43 connected to cooling water paths 50.

The inflow balancer 41 is configured to connect inlets of the cooling water path 50 to balance (e.g., to distribute) the inflow of the cooling water flow. The outflow balancer 42 is configured to connect outlets of the cooling water path 50 to balance (e.g., to collect) the outflow of the cooling water flow. The regression portion 43 is configured to connect the cooling water path 50 on a regression side of the cooling water path 50 to form a balance of cooling water regression.

The inflow balancer 41 connects one final inlet 412 to inflow balancing channels 411, which are respectively connected to the inlets of the cooling water path 50. The outflow balancer 42 connects outflow balancing channels 421, which are respectively connected to the outlets of the cooling water path 50, into one final outlet 422.

The regression portion 43 includes a first regression line 431 and a second regression line 432. The first regression line 431 connects the outlets and the inlets of the cooling water path 50 formed in the first floor 11 to each other. The second regression line 432 connects the outputs and the inlets on the regression side of the cooling water path 50 formed in the second floors 211 and 221 of the first and second side frames 21 and 22.

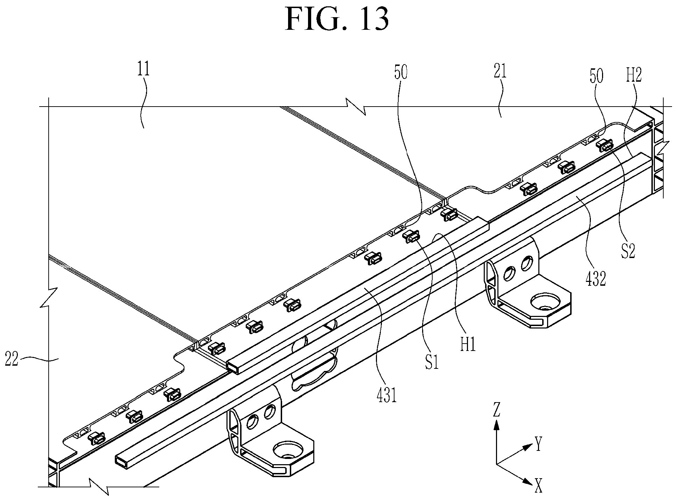

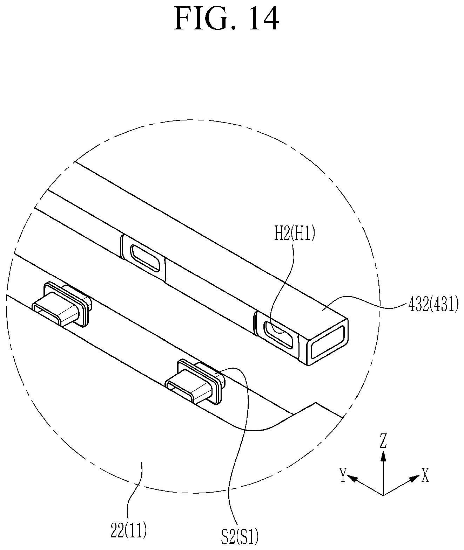

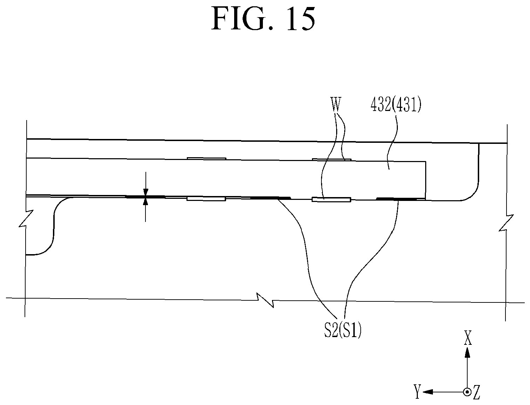

FIG. 13 is an exploded perspective view of the regression portion of the cooling water path shown in FIG. 8, FIG. 14 is an enlarged exploded perspective view of a portion of FIG. 13, and FIG. 15 is an enlarged top plan view of coupling in a portion of FIG. 13.

Referring to FIG. 13 to FIG. 15, a first regression line 431 has a plurality of regression holes (e.g., regression openings) H1 and is formed as a first regression pipe 431 that is connected to the cooling water path 50 through a rubber seal S1 and welded to the first floor 11.

A second regression line 432 is disposed at one side of the first regression pipe 431 in the first direction (e.g., the x-axis direction), has a plurality of regression holes (e.g., regression openings) H2, and is formed as a second regression pipe 432 that is connected to the cooling water path 50 through a rubber seal S2 and welded to the second floors 211 and 221.

For convenience in description, the same reference numerals are assigned to the first and second regression lines 431 and 432 and the first and second regression pipes 431 and 432. The first and second regression pipes 431 and 432 are welded (W) to the first floor 11 and the second floors 211 and 221. In such an embodiment, the seals S1 and S2 are compressed to seal the connection between the cooling water path 50 and the regression holes H1 and H2.

As an example, when the center frame 10 and the first and second side frames 21 and 22 are aluminium-extruded, the first and second regression pipes 431 and 432 are formed of aluminium pipes to improve welding performance.

Referring back to FIG. 8, the inflow balancing channels 411 of the inflow balancer 41 are connected to the cooling water paths 50 in the second floor 211 of the first side frame 21 and are connected to half of the cooling water paths 50 in the first floor 11 of the center frame 10.

The outflow balancing channels 421 of the outflow balancer 42 are connected to the cooling water paths 50 in the second floor 221 of second side frame 22 and to the remaining half of the cooling water paths 50 in the first floor 11 of the center frame 10.

As shown in FIG. 8, the inflow balancing channel 411 of inflow balancer 41 and the outflow balancing channel 421 of the outflow balancer 42 may be formed to have the same structure.

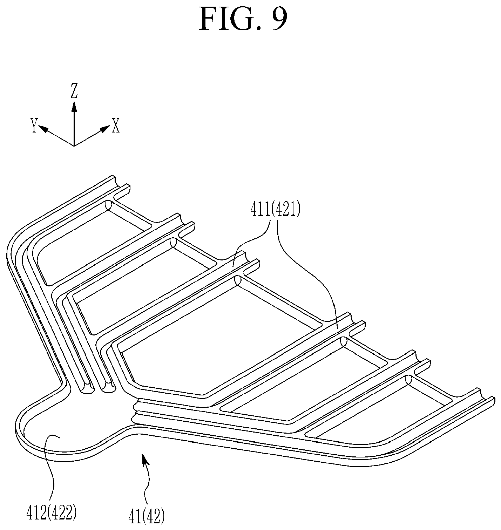

FIG. 9 is a perspective view of a flow balancer applied to the inlet and outlet of the cooling water path in the pack frame shown in FIG. 5. Referring to FIG. 9, the inflow balancing channels 411 of the inflow balancer 41 form a symmetrical structure in the second direction (e.g., the y-axis direction) and are connected as one (e.g., are connected together) at the final inlet 412. Low temperature cooling water flows into the final inlet 412.

The outflow balancing channels 421 of the outflow balancer 42 form a symmetrical structure in the second direction (e.g., the y-axis direction) and connect as one (e.g., connect together) at the final outlet 422. High temperature cooling water flows out through the final outlet 422.

Therefore, the low-temperature cooling water inflows into the inflow balancer 41 is first heated via the cooling water path 50 and secondarily heated via the first and second regression lines 431 and 432 and the cooling water path 50. Heated high temperature cooling water flows out through the outflow balancer 42.

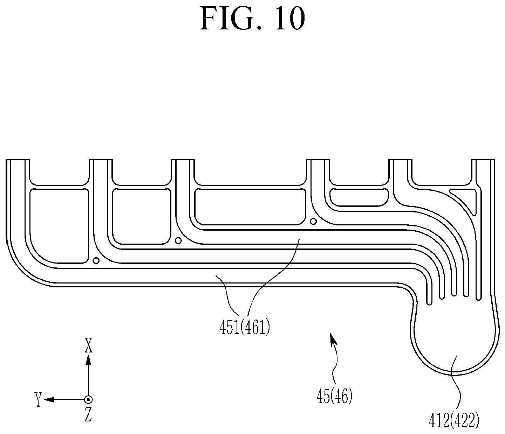

FIG. 10 is a top plan view of a flow balancer according to another embodiment. Referring to FIG. 10, an inflow balancing channel 451 of an inflow balancer 45 may have a channel length that gradually becomes shorter or longer from the outside toward the center in the second direction (e.g., the y-axis direction). A channel length of the outflow balancing channel 461 of an outflow balancer 46 may gradually become shorter or longer from the outside toward the center in the second direction (e.g., the y-axis direction). The inflow balancing channels 451 and the outflow balancing channels 461 may be the same width or may have a width of approximately similar size.

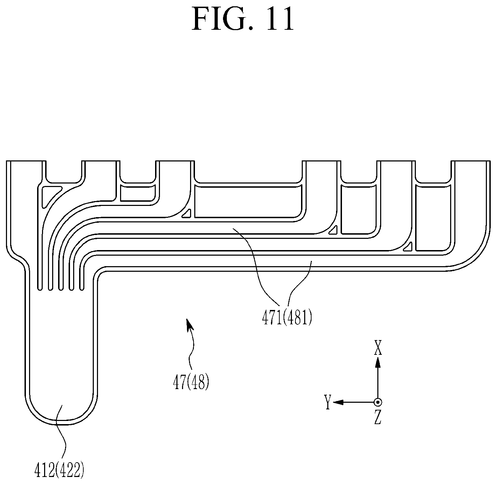

FIG. 11 is a top plan view of a flow balancer according to another embodiment. Referring to FIG. 11, an inflow balancing channel 471 of an inflow balancer 47 may have a channel length that gradually becomes shorter or longer from the outside toward the center in the second direction (e.g., the y-axis direction). A channel length of the outflow balancing channel 481 of an outflow balancer 48 may gradually become shorter or longer from the outside toward the center in the second direction (e.g., the y-axis direction). The inflow balancing channels 471 and the outflow balancing channels 481 may be formed to have a relatively large width on the cooling water path 50 side and a relatively narrow width on the final inlet 412 or final outlet side 422.

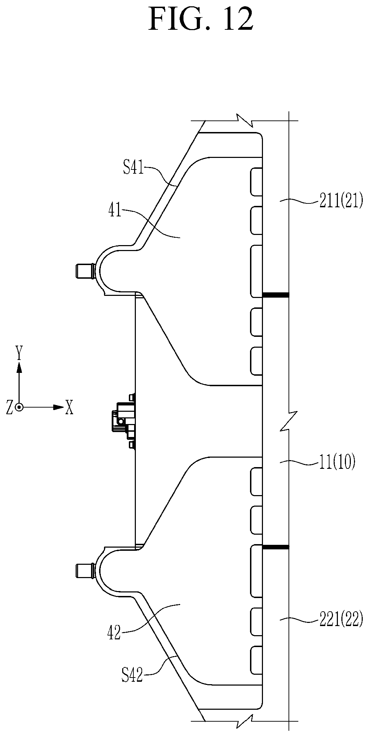

FIG. 12 is a top plan view of a state in which the flow balancer shown in FIG. 9 is installed at inlet/outlet side of a path in the pack frame. Referring to FIG. 12, an inflow balancer 41 is installed on one side of a first side frame 21 and a center frame 10 and assembled thereto by welding, and a sealing structure is formed on a lower surface of the second floor 211 and the first floor 11 with a seal member S41 disposed therebetween. In such an embodiment, the inflow balancing channels 411 are connected to the cooling water path 50.

An outflow balancer 42 is installed on one side of a second side frame 22 and the center frame 10 and assembled thereto by welding, and a sealing structure is formed on a lower surface of the second floor 211 and the first floor 11 with a seal member S42 disposed therebetween. In such an embodiment, the outflow balancing channels 421 are connected to the cooling water path 50.

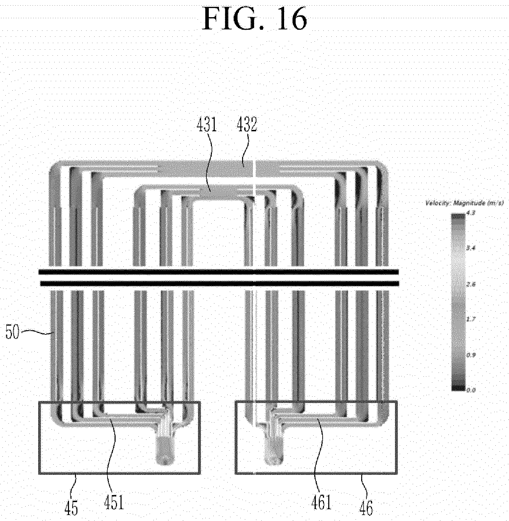

FIG. 16 is an image of a computer aided engineering (CAE) analysis result when using a flow balancer. In particular, the image of FIG. 16 shows a CAE analysis result when the inflow balancer 45 and the outflow balancer 46 shown in FIG. 10 are used.

As can be seen in FIG. 16, similar temperature distribution occurs in the inflow balancer 45 and the outflow balancer 46 and symmetrical temperature distribution occurs in the second direction (e.g., the y-axis direction), and similar temperature distribution occurs in the cooling water paths 50 connected to the inflow balancer 45 and the cooling water paths connected to outflow balancer 46 and symmetric temperature distribution occurs in the second direction (e.g., the y-axis direction).

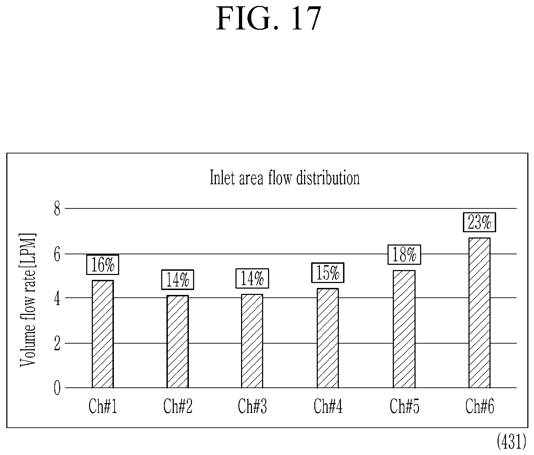

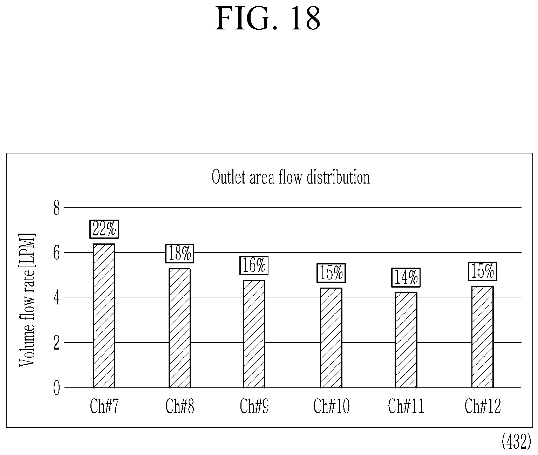

FIG. 17 is a graph describing an inlet area flow distribution for each cooling channel when using a flow balancer, and FIG. 18 is a graph describing an outlet area flow distribution for each cooling channel when using a flow balancer.

Referring to FIG. 17 and FIG. 18, a similar flow distribution is achieved between the inflow balancing channels 451 of the inflow balancer 45, and a similar flow distribution is achieved between the outflow balancing channels 461 of the outflow balancer 46.

Further, the flow distribution of the inflow balancer 45 and the flow distribution of the outflow balancer 46 is symmetrical to each other in the second direction (e.g., the y-axis direction). In addition, symmetrical temperature distribution occurs in the first and second regression lines 431 and 432 in the second direction (e.g., the y-axis direction).

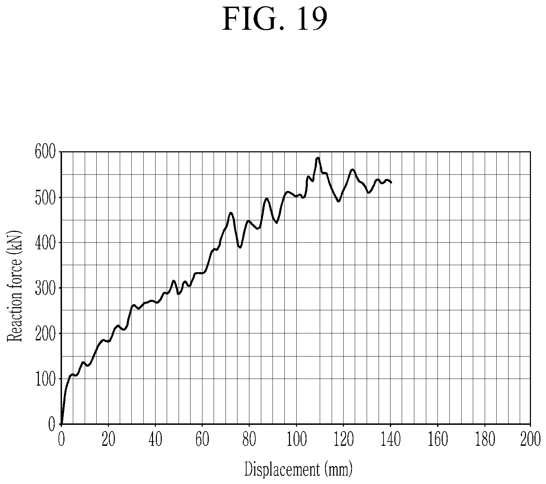

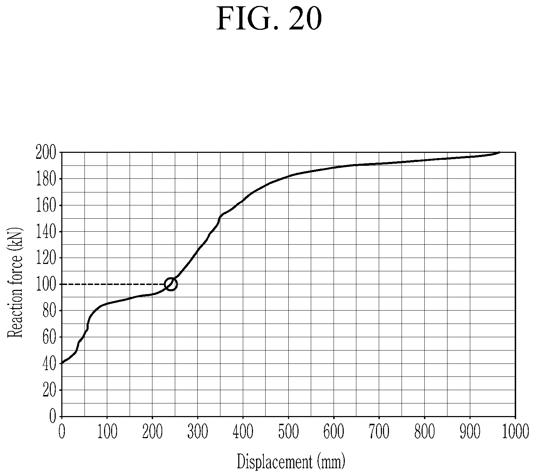

FIG. 19 is a graph describing improvement of a crush characteristic in the x-axis direction as a result of CAE analysis in a structure in which the frame and the cooling water path are integrated according to an embodiment of the present disclosure, and FIG. 20 is a graph describing the crush characteristic in the x-axis direction as a result of the CAE analysis when applying a structure in which a frame and a cooling water path are not integrated, according to a comparative example.

In the pack frame 200, according to an embodiment, the cooling water path 50 is integrally formed in the first floor 11 and the second floors 211 and 221, and the inflow balancer 45, the outflow balancer 46, the first regression pipe 431, and the second regression pipe 432 are connected to the cooling water path 50.

As can be seen in FIG. 19, the x-axis direction crush characteristic of the rechargeable battery pack, according to an embodiment in which the cooling portion is integrally formed in the pack frame, is increased compared to the comparative example in which the cooling portion is separately formed.

In the comparative example (see FIG. 20), the pack frame was crushed at a reaction force of 80-100 kN. On the contrary, referring to FIG. 19, which describes an embodiment of the present disclosure, the displacement of the pack frame 200 was 4 mm at a reaction force of 100 kN, and the displacement of pack frame 200 was 23 mm at a reaction force of 200 kN.

The rechargeable battery according to an embodiment may further include a pack cover mounted on the first and second side frames 21 and 22 and the first and second end frames 31 and 32. The pack cover covers a bus bar that electrically connects the electrode terminals 102 and 103 of the battery cells 101.

Referring back to FIG. 1 and FIG. 2, in the pack frame 200, the first and second side frames 21 and 22 are formed long along the first direction (e.g., the x-axis direction) on the outside of pack frame 200 in the second direction (e.g., the y-axis direction) and may be mounted on a vehicle as a fastening member through a flange.

While embodiments of the present disclosure have been described above, the present disclosure is not limited thereto, and various modifications can be made and carried out within the scope of the claims, the detailed description, and the accompanying drawings, which fall within the scope of the present disclosure.

### Description of Some Reference Symbols

| | | | |
|---|---|---|---|
| 10: | center frame | 11: | first floor |
| 12: | first sidewall | 21: | first side frame |
| 22: | second side frame | 31: | first end frame |
| 32: | second end frame | 40: | intersection center frame |
| 41: | inflow balancer | 42: | outflow balancer |
| 43: | regression portion | 45, 47: | inflow balancer |
| 46, 48: | outflow balancer | 50: | cooling water path |
| 63: | coupling protrusion | 64: | coupling groove |
| 73, 74: | first, second side frame | 100: | cell stack |
| 101: | battery cell | 102, 103: | electrode terminal |
| 200: | pack frame | 211, 221: | second floor |
| 212, 222: | second sidewall | 411: | inflow balancing channel |
| 412: | final inlet | 421: | outflow balancing channel |
| 422: | final outlet | 431: | first regression line (pipe) |
| 432: | second regression line(pipe) | 451, 471: | inflow balancing channel |
| 461, 481: | outflow balancing channel | 610: | center frame |
| 611: | first floor | 621: | second floor |
| 710: | center frame | 711: | first floor |
| 731, 741: | second floor | H1, H2: | regression hole |
| S1, S2: | rubber seal | S41, S42: | seal member |
| W: | welding portion | W1: | first width |
| W2: | second width | WP: | welding |

## Claims

1. A rechargeable battery pack comprising:
a cell stack (100) comprising a plurality of battery cells (101) stacked in a first direction;
a center frame (10) integrally forming a first floor (11) and a first sidewall (12) supporting the cell stack (100); and
a first side frame (21) and a second side frame (22) integrally forming a second floor (211, 221) coupled to the first floor (11) in a second direction crossing the first direction and a second side wall (212, 222) supporting narrow cell side surfaces of the cell stack (100),
wherein the first floor (11) and the second floor (211, 221) comprise a plurality of cooling water paths (50) extending in the first direction and spaced a distance from each other in the second direction, **characterised in that** the first floor (11) and the second floor (211, 221) comprise:
an inflow balancer (41) connecting inlets of the cooling water path (50) to balance the inflow cooling water flow;
an outflow balancer (42) connecting outlets of the cooling water path (50) to balance the outflow cooling water flow; and
a regression portion (43) connecting the cooling water path (50) on a regression side of the cooling water path to form a balance of cooling water regression.

2. The rechargeable battery pack of claim 1, wherein the inflow balancer (41) connects inflow balancing channels (411), each of which are connected to the inlets of the cooling water path (50), together at a final inlet (412), and
wherein the outflow balancer (42) connects outflow balancing channels (421), each of which are connected to the outlets of the cooling water path (50), together at a final outlet (422).

3. The rechargeable battery pack of claim 2, wherein the regression portion (43) comprises:
a first regression line (431) connecting the outlet and the inlets of the cooling water path (50) formed in the first floor (11); and
a second regression line (432) connecting the outlet and the inlets of the cooling water path (50) formed in the second floor (211, 221).

4. The rechargeable battery pack of claim 3, wherein the first regression line (431) has a plurality of regression holes (H1) and is a first regression pipe (431) that is welded to the first floor (11) and connected to the cooling water path (50) by a rubber seal (S1).

5. The rechargeable battery pack of claim 4, wherein the second regression line (432) is at one side of the first regression pipe (431) in the first direction, has a plurality of regression holes ( H2), and is a second regression pipe (432) connected to the cooling water path (50) and welded to the second floor (211, 221) by a rubber seal (S2).

6. The rechargeable battery pack of any one of claims 2 to 5, wherein the inflow balancing channels (411) of the inflow balancer (41) are connected to the cooling water paths (50) in the second floor (211, 221) of the first side frame (21) and to half of the cooling water paths (50) in the first floor (11) of center frame (10), and
wherein the outflow balancing channels (421) of the outflow balancer (42) are connected to the cooling water paths (50) in the second floor (211, 221) of the second side frame (22) and to the remaining half of the cooling water paths (50) in the first floor (11) of the center frame (10).

7. The rechargeable battery pack of claim 6, wherein the inflow balancing channels (411) of the inflow balancer (41) form a symmetrical structure in the second direction.

8. The rechargeable battery pack of claim 6 or claim 7, wherein the outflow balancing channels (421) of the outflow balancer (42) form a symmetrical structure in the second direction.

9. The rechargeable battery pack of claim 6, wherein the inflow balancing channels (451) of the inflow balancer (45) have lengths that gradually decrease or increase respectively from the outside toward the center in the second direction.

10. The rechargeable battery pack of claim 6 or claim 9, wherein the outflow balancing channels (461) of the outflow balancer (46) have lengths that gradually decrease or increase respectively from the outside toward the center in the second direction.

11. The rechargeable battery pack of any one of claims 1 to 10, wherein the first floor (11) and the second floor (211, 221) are welded to form a welding bottom surface having a first width (W1), a welding top surface having a second width (W2) larger than the first width (W1), and a welding slope connecting the bottom surface and the top surface.

12. The rechargeable battery pack of any one of claims 1 to 11, wherein the first floor (611) and the second floor (621) are connected through coupling of a coupling protrusion (63) and a coupling groove (64) formed along the first direction, optionally wherein the coupling protrusion (3) and the coupling groove (64) are fixed by welding in the coupled state.

13. The rechargeable battery pack of any one of claims 1 to 12, wherein the first floor (711) has a narrow lower surface and a wide upper surface such that side surfaces thereof are inclined downwardly, and
wherein the second floor (731, 741) has a wide lower surface and a narrow upper surface such that side surfaces thereof are inclined upwardly, and
wherein the downward-inclined side surfaces of the first floor (711) are coupled to the upward-inclined side surfaces of the second floor (731, 741) at opposite sides in the second direction.

14. The rechargeable battery pack of any one of claims 1 to 13, further comprising a first end frame (31) and a second end frame (32) respectively coupled to opposite ends of the center frame (10), the first side frame (31), and the second side frame (22) in the first direction to support wide cell side surfaces of the cell stack (100).

## Patentansprüche

1. Aufladbares Batteriepack, umfassend:
einen Zellenstapel (100), der eine Vielzahl von Batteriezellen (101) umfasst, die in einer ersten Richtung gestapelt sind;
ein Mittelrahmen (10), der einstückig einen ersten Boden (11) und eine erste Seitenwand (12) bildet, die den Zellenstapel (100) stützen; und
einen ersten Seitenrahmen (21) und einen zweiten Seitenrahmen (22), die einstückig einen zweiten Boden (211, 221), der mit dem ersten Boden (11) in einer zweiten Richtung, die die erste Richtung kreuzt, gekoppelt ist, und eine zweite Seitenwand (212, 222) bilden, die schmale Zellenseitenflächen des Zellenstapels (100) stützen,
wobei der erste Boden (11) und der zweite Boden (211, 221) eine Vielzahl von Kühlwasserpfaden (50) umfassen, die sich in der ersten Richtung erstrecken und in der zweiten Richtung voneinander beabstandet sind, **dadurch gekennzeichnet, dass** der erste Boden (11) und der zweite Boden (211, 221) umfassen:
ein Zuflussausgleicher (41), der Einlässe des Kühlwasserpfads (50) verbindet, um den zufließenden Kühlwasserdurchfluss auszugleichen;
ein Abflussausgleicher (42), der Auslässe des Kühlwasserpfads (50) verbindet, um den abfließenden Kühlwasserdurchfluss auszugleichen; und
einen Regressionsabschnitt (43), der den Kühlwasserpfad (50) auf einer Regressionsseite des Kühlwasserpfads verbindet, um einen Ausgleich der Kühlwasserregression zu bilden.

2. Aufladbares Batteriepack nach Anspruch 1, wobei der Zuflussausgleicher (41) Zuflussausgleichskanäle (411), die jeweils mit den Einlässen des Kühlwasserpfads (50) verbunden sind, an einem letzten Einlass (412) miteinander verbindet, und
wobei der Abflussausgleicher (42) Abflussausgleichskanäle (421), die jeweils mit den Auslässen des Kühlwasserpfads (50) verbunden sind, an einem letzten Auslass (422) miteinander verbindet.

3. Aufladbares Batteriepack nach Anspruch 2, wobei der Regressionsabschnitt (43) umfasst:
eine erste Regressionsleitung (431), die den Auslass und die Einlässe des Kühlwasserpfads (50), die in dem ersten Boden (11) gebildet sind, verbindet; und
eine zweite Regressionsleitung (432), die den Auslass und die Einlässe des Kühlwasserpfads (50), die in dem zweiten Boden (211, 221) gebildet sind, verbindet.

4. Aufladbares Batteriepack nach Anspruch 3, wobei die erste Regressionsleitung (431) eine Vielzahl von Regressionslöchern (H1) aufweist und ein erstes Regressionsrohr (431) ist, das mit dem ersten Boden (11) verschweißt ist und durch eine Gummidichtung (S1) mit dem Kühlwasserpfad (50) verbunden ist.

5. Aufladbares Batteriepack nach Anspruch 4, wobei sich die zweite Regressionsleitung (432) auf einer Seite des ersten Regressionsrohrs (431) in der ersten Richtung befindet, eine Vielzahl von Regressionslöchern (H2) aufweist und ein zweites Regressionsrohr (432) ist, das mit dem Kühlwasserpfad (50) verbunden ist und durch eine Gummidichtung (S2) mit dem zweiten Boden (211, 221) verschweißt ist.

6. Aufladbares Batteriepack nach einem der Ansprüche 2 bis 5, wobei die Zuflussausgleichskanäle (411) des Zuflussausgleichers (41) mit den Kühlwasserpfaden (50) in dem zweiten Boden (211, 221) des ersten Seitenrahmens (21) und mit der Hälfte der Kühlwasserpfade (50) in dem ersten Boden (11) des Mittelrahmens (10) verbunden sind, und
wobei die Abflussausgleichskanäle (421) des Abflussausgleichers (42) mit den Kühlwasserpfaden (50) in dem zweiten Boden (211, 221) des zweiten Seitenrahmens (22) und mit der verbleibenden Hälfte der Kühlwasserpfade (50) in dem ersten Boden (11) des Mittelrahmens (10) verbunden sind.

7. Aufladbares Batteriepack nach Anspruch 6, wobei die Zuflussausgleichskanäle (411) des Zuflussausgleichers (41) in der zweiten Richtung eine symmetrische Struktur bilden.

8. Aufladbares Batteriepack nach Anspruch 6 oder Anspruch 7, wobei die Abflussausgleichskanäle (421) des Abflussausgleichers (42) in der zweiten Richtung eine symmetrische Struktur bilden.

9. Aufladbares Batteriepack nach Anspruch 6, wobei die Zuflussausgleichskanäle (451) des Zuflussausgleichers (45) Längen aufweisen, die von außen zur Mitte hin in der zweiten Richtung allmählich abnehmen bzw. zunehmen.

10. Aufladbares Batteriepack nach Anspruch 6 oder Anspruch 9, wobei die Abflussausgleichskanäle (461) des Abflussausgleichers (46) Längen aufweisen, die von außen zur Mitte hin in der zweiten Richtung allmählich abnehmen bzw. zunehmen.

11. Aufladbares Batteriepack nach einem der Ansprüche 1 bis 10, wobei der erste Boden (11) und der zweite Boden (211, 221) so verschweißt sind, dass sie eine untere Schweißfläche, die eine erste Breite (W1) aufweist, eine obere Schweißfläche, die eine zweite Breite (W2) aufweist, die größer als die erste Breite (W1) ist, und eine Schweißschräge bilden, die die untere Fläche und die obere Fläche verbindet.

12. Aufladbares Batteriepack nach einem der Ansprüche 1 bis 11, wobei der erste Boden (611) und der zweite Boden (621) durch Kopplung eines Kopplungsvorsprungs (63) und einer Kopplungsnut (64), die entlang der ersten Richtung gebildet sind, verbunden sind, wobei optional der Kopplungsvorsprung (3) und die Kopplungsnut (64) im gekoppelten Zustand durch Schweißen fixiert sind.

13. Aufladbares Batteriepack nach einem der Ansprüche 1 bis 12, wobei der erste Boden (711) eine schmale untere Fläche und eine breite obere Fläche aufweist, sodass Seitenflächen davon nach unten geneigt sind, und
wobei der zweite Boden (731, 741) eine breite untere Fläche und eine schmale obere Fläche aufweist, sodass Seitenflächen davon nach oben geneigt sind, und
wobei die nach unten geneigten Seitenflächen des ersten Bodens (711) an gegenüberliegenden Seiten in der zweiten Richtung mit den nach oben geneigten Seitenflächen des zweiten Bodens (731, 741) gekoppelt sind.

14. Aufladbares Batteriepack nach einem der Ansprüche 1 bis 13, weiter umfassend einen ersten Endrahmen (31) und einen zweiten Endrahmen (32), die jeweils mit gegenüberliegenden Enden des Mittelrahmens (10), des ersten Seitenrahmens (31) und des zweiten Seitenrahmens (22) in der ersten Richtung gekoppelt sind, um breite Zellenseitenflächen des Zellenstapels (100) zu stützen.

## Revendications

1. Bloc-batterie rechargeable comprenant :
une pile de cellules (100) comprenant une pluralité de cellules de batterie (101) empilées dans une première direction ;
un cadre central (10) formant de manière intégrale un premier étage (11) et une première paroi latérale (12) supportant la pile de cellules (100) ; et
un premier cadre latéral (21) et un second cadre latéral (22) formant intégralement un second étage (211, 221) couplé au premier étage (11) dans une seconde direction croisant la première direction et une seconde paroi latérale (212, 222) supportant les surfaces latérales étroites de la pile de cellules (100),
dans lequel le premier étage (11) et le second étage (211, 221) comprennent une pluralité de conduits d'eau de refroidissement (50) s'étendant dans la première direction et espacés d'une certaine distance l'un de l'autre dans la seconde direction, **caractérisé en ce que** le premier étage (11) et le second étage (211, 221) comprennent :
un équilibreur d'entrée (41) reliant les entrées du circuit d'eau de refroidissement (50) pour équilibrer le débit d'eau de refroidissement entrant ;
un régulateur de débit de sortie (42) reliant les sorties du circuit d'eau de refroidissement (50) afin d'équilibrer le débit d'eau de refroidissement de sortie ; et
une portion de régression (43) reliant le chemin d'eau de refroidissement (50) sur un côté de régression du chemin d'eau de refroidissement pour former un équilibre de régression d'eau de refroidissement.

2. Bloc-batterie rechargeable selon la revendication 1, dans lequel l'équilibreur du flux d'entrée (41) relie les canaux d'équilibrage d'entrée (411), chacun de ceux-ci étant relié aux entrées du circuit d'eau de refroidissement (50), ensemble à une entrée finale (412), et
dans lequel l'équilibreur du flux de sortie (42) relie les canaux d'équilibrage du flux de sortie (421), chacun de ceux-ci étant relié aux sorties du circuit d'eau de refroidissement (50), ensemble à une sortie finale (422).

3. Bloc-batterie rechargeable selon la revendication 2, dans lequel la partie régressive (43) comprend :
une première ligne de régression (431) reliant la sortie et les entrées du circuit d'eau de refroidissement (50) formée dans le premier étage (11) ; et
une seconde ligne de régression (432) reliant la sortie et les entrées du circuit d'eau de refroidissement (50) formée dans le second étage (211,221).

4. Bloc-batterie rechargeable selon la revendication 3, dans lequel la première ligne de régression (431) comporte une pluralité de trous de régression (H1) et est un premier tuyau de régression (431) qui est soudé au premier étage (11) et relié au chemin d'eau de refroidissement (50) par un joint en caoutchouc (S1).

5. Bloc-batterie rechargeable selon la revendication 4, dans lequel la seconde ligne de régression (432) est d'un côté du premier tuyau de régression (431) dans la première direction, comporte une pluralité de trous de régression ( H2), et est un second tuyau de régression (432) connecté au chemin d'eau de refroidissement (50) et soudé au second étage (211, 221 ) par un joint en caoutchouc (S2).

6. Bloc-batterie rechargeable selon l'une quelconque des revendications 2 à 5, dans lequel les canaux d'équilibrage du débit d'entrée (411) de l'équilibreur d'entrée (41) sont connectés aux circuits d'eau de refroidissement (50) dans le second étage (211, 221) du premier cadre latéral (21) et à la moitié des circuits d'eau de refroidissement (50) dans le premier étage (11) du cadre central (10), et
dans lequel les canaux d'équilibrage de débit sortie (421) de l'équilibreur de sortie (42) sont connectés aux chemins d'eau de refroidissement (50) du second étage (211, 221) du second cadre latéral (22) et à la moitié restante des chemins d'eau de refroidissement (50) du premier étage (11) du cadre central (10).

7. Bloc-batterie rechargeable selon la revendication 6, dans lequel les canaux d'équilibrage du débit d'entrée (411) de l'équilibreur d'entrée (41) forment une structure symétrique dans la seconde direction.

8. Bloc-batterie rechargeable selon la revendication 6 ou de la revendication 7, dans lequel les canaux d'équilibrage du débit de sortie (421) de l'équilibreur de sortie (42) forment une structure symétrique dans la seconde direction.

9. Bloc-batterie rechargeable selon la revendication 6, dans lequel les canaux d'équilibrage du débit d'entrée (451) de l'équilibreur d'entrée (45) présentent des longueurs qui diminuent ou augmentent progressivement respectivement de l'extérieur vers le centre dans la seconde direction.

10. Bloc-batterie rechargeable selon la revendication 6 ou la revendication 9, dans lequel les canaux d'équilibrage du débit de sortie (461) de l'équilibreur de sortie (46) présentent des longueurs qui diminuent ou augmentent progressivement respectivement de l'extérieur vers le centre dans la seconde direction.

11. Bloc-batterie rechargeable selon l'une quelconque des revendications 1 à 10, dans lequel le premier étage (11) et le second étage (211, 221) sont soudés pour former une surface inférieure de soudage présentant une première largeur (W1), une surface supérieure de soudage présentant une seconde largeur (W2) plus grande que la première largeur (W1), et une pente de soudage reliant la surface inférieure et la surface supérieure.

12. Bloc-batterie rechargeable selon l'une quelconque des revendications 1 à 11, dans lequel le premier étage (611) et le second étage (621) sont connectés par couplage d'une protubérance de couplage (63) et d'une rainure de couplage (64) formée le long de la première direction, dans lequel la protubérance de couplage (3) et la rainure de couplage (64) sont optionnellement fixées par soudage à l'état couplé.

13. Bloc-batterie rechargeable selon l'une quelconque des revendications 1 à 12, dans lequel le premier étage (711) présente une surface inférieure étroite et une surface supérieure large de sorte que ses surfaces latérales soient inclinées vers le bas, et
dans lequel le second étage (731, 741) présente une large surface inférieure et une surface supérieure étroite de sorte que ses surfaces latérales soient inclinées vers le haut, et
dans lequel les surfaces latérales inclinées vers le bas du premier étage (711) sont couplées aux surfaces latérales inclinées vers le haut du second étage (731, 741) sur les côtés opposés dans la seconde direction.

14. Bloc-batterie rechargeable selon l'une quelconque des revendications 1 à 13, comprenant en outre un premier cadre d'extrémité (31) et un second cadre d'extrémité (32) respectivement couplés aux extrémités opposées du cadre central (10), du premier cadre latéral (31) et du second cadre latéral (22) dans la première direction pour supporter les larges surfaces latérales des cellules de la pile de cellules (100).
